# EUROPEAN PATENT SPECIFICATION

(11) **EP 0 380 963 B1**
(45) Date of publication and mention of the grant of the patent: **07.09.1994**
(21) Application number: 90100903.5
(22) Date of filing: 17.01.1990
(51) Int. Cl.: B29C 67/22

(54) **Process and plant for continuously manufacturing cellular products of latex foam and the like**
Verfahren und Anlage zum kontinuierlichen Herstellen zellularer Gegenständen aus Latexschaum und dergleichen
Procédé et installation pour fabriquer en continu des produits cellulaires en latex moussé et similaires

(30) Priority: 30.01.1989 IT 1923989
(43) Date of publication of application: 08.08.1990
(73) Proprietor: SAPSA BEDDING S.p.A., 20099 Sesto San Giovanni (MI) (IT)
(72) Inventor: Ferraro, Ferdinando, I-20133 Milan (IT)
(74) Representative: Mazzarella, Vincenzo, Mavipat S.a.S. di Dr.Ing. Vincenzo Mazzarella & C.

(56) References cited:
- US-A- 2 757 415
- US-A- 2 905 970
- US-A- 3 076 226
- US-A- 3 081 496
- US-A- 4 149 840

## Description

The present invention is directed to a process and plant for continuously manufacturing cellular products of latex foam or the like and more specifically the invention is directed to the manufacture of cellular mattresses and cushions.

Various processes for manufacturing cellular products of latex foam are already known.

Generally the known processes are based substantially on the use of moulds constituted by a case and a lid whose inner surface is provided with a plurality of protuberances corresponding to the shape of the cells of the desired product.

The cavity of the mould filled with latex foam is heated by circulating steam under pressure in suitable air spaces so as to transfer the heat necessary for the vulcanizing process either to the metallic walls or to the metallic protuberances around and through the foam.

Then following the opening of the mould, the already vulcanized product is manually removed from the various protuberances.

Unfortunately, it is noted that the final product can show inadequate characteristics of capacity load or lifetime and this for a good part owing to a possible insufficient vulcanization of some parts inside the spongy mass.

In fact, in the cited moulds, the cavities delimited by the surfaces of the protuberances are closed at the base by an appropriate plate whose tightness can result not sufficient and permit thus during the vulcanizing step the entry of superheated steam inside the cavities.

Then, at the end of the cycle, the steam entered inside some protuberances, is transformed into condensate with the negative consequence of originating in the mould some protuberances having the cavities occupied at least in part by condensate of steam and other protuberances devoid of condensate at their inside.

As it can be understood in the successive working cycle, the various protuberances heat in a different manner the surrounding foam mass wherein they penetrate originating consequently a different cross-linking from one zone to another with the drawback of producing localized less cured zones, i.e. zones more exposed to tears, for instance in a cellular mattress in consequence of various folding cycles.

Moreover the mould processes are not suitable for manufacturing cellular products of different dimensions.

In fact, the demand of a cellular mattress, for instance with a thickness higher than that of a preceeding production requires the recourse to a higher mould case to enable the mould to contain a higher level of foam.

Usually it is also required a well determined capacity loads of the mattress using a particular geometry of the cells present in the foam mass.

Consequently, wishing not to change the capacity load among mattresses of different height, it is necessary to change the height of the various protuberances, consequently to substitute the mould, so as not to change the thickness of the continuous layer present in the upper part of the mattress.

However, the change of the mould to satisfy a wide range of demands involves the drawback of high or anyhow not desired costs of plant.

A process for continuously manufacturing not cellular products of latex foam is also known.

The known process is accomplished by placing on a steel strip moving continuously a foam layer that gradually is vulcanized by passing through a tunnel heated with steam under pressure.

On coming out of the vulcanizer, the continuous layer is cut transversely of its length into several single pieces subjected then to the drying step to draw off soaps and like substances usually added to the latex compound at the beginning.

The cited process is used for manufacturing layers of latex foam of very reduced thickness, generally of 4 - 5 cm, and cannot be utilized for manufacturing mattresses usually having thickness comprised between 14 and 18 cm.

In fact, lacking the metallic protuberances previously cited in the moulds for cellular products, the super-heated steam is not able alone to transmit heat to consistent masses of spongy material in depth.

Moreover in the cited process it is possible to have the drawback of a not desired imprinting of the just formed outer layer of foam before coming into the tunnel and this owing to any substance present in the outer ambient falling on the layer and particularly to the transformation of the steam escaping from the tunnel in the form of condensate drops.

It is also known from US-A-3076226 a method for making continuous sheets of cured foam rubber wherein a plurality of cells open on the layer surface of the continuous sheet are formed.

These cells are obtained by pouring the foam material on a conveyor belt provided with a plurality of projections.

After the curing step a transfer conveyor strips the foam from the conveyor belt according to an inclined direction.

More in detail, it is known from US-A-3076226 an apparatus including an endless belt provided with a pattern of projections and moving in an endless path.As the belt moves, latex is continuously supplied to a nozzle moved back and forh across and deposited on the belt covering the projections.

Afterwards, the foam is progressively transported still on the belt through a conventional curing oven, from which it emerges as a continuous sheet of cured foam rubber.

After curing the foam is progressively seaparated from the belt for causing the projections to be stripped from the cured sheet of the foamed latex.

Thereafter, the foam may be cut into sheets as desired.

Therefore, the aim of the present invention is a process and plant, both devoid of all the previously cited drawbacks.

The object of the present invention is a process for manufactruring cellular products as defined in claim 1.

Preferably the process is characterized by the fact of advancing in a continuous manner the said laying surface and of moulding said plurality of cells in direction perpendicular to the faces of the layer.

In alternative to what mentioned above, the process can be characterized by the fact of advancing the laying surface with an intermittent motion and of moulding a plurality of cells perpendicularly to said faces of the layer when said surface is still.

The vulcanization can be carried out by supplying heat to the cells in any whatsoever manner, among other things by means of a heating fluid, for instance preferably steam under pressure.

A further object of the invention is a plant for manufacturing cellular products as defined in claim 6,
The present invention will be better understood by the following detailed description made by way of non limiting example with reference to the figures of the attached sheets of drawing in which:
- FIGURE 1 -: is a perspective view of a portion of the continuous layer obtained by means of a plant according to the invention;
- FIGURE 2 -: is an illustrative scheme of a plant for manufacturing the continuous layer of figure 1;
- FIGURE 3 -: is a partial lateral view of the means for moulding the cells of the continuous layer of figure 1;
- FIGURE 4 -: is a partial view of the element for conveying the moulding means of figure 3:
- FIGURE 5 -: is a partial view of the meshing of a toothed wheel with the means for conveying the moulding means;
- FIGURES 6 and 7 -: show two sections along lines VI-VI and VII-VII of figure 3, and
- FIGURE 8 -: is a lateral partial view of the driving means for lowering the protuberances for moulding the cells of the continuous layer of figure 1.

The plant for manufacturing a continuous layer 1 is now described. The said continuous layer 1 is divisible into single mattresses provided with cells 2 and delimited externally and internally by faces 3 and 4 and laterally by the sides 5 and 6.

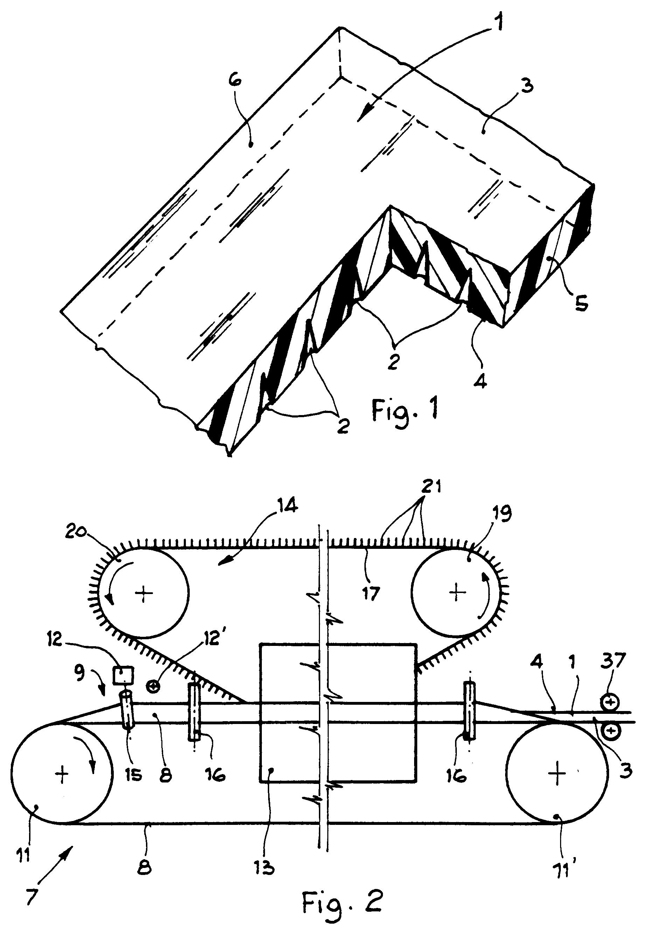

Figure 2 shows in its more general aspect a plant 7 for manufacturing the continuous layer 1 of figure 1.

The plant 7 comprises a rubber conveyor belt 8 moving forward continuously between two stations, a first station 9 and a second station 10, respectively, a device 12 for placing the foam layer in proximity of the first station, a tunnel vulcanizer 13 making use of steam under pressure, means 14 for moulding the cells 2, means for setting in action the moulding means which will be explained hereinafter. The conveyor belt is rotate through pulleys 11, 11'.

As clearly shown in figure 2, the conveyor belt 8 comprises lips 8' between the stations 9 and 10 deformed upwards by the action of rollers 15 and 16 idle applied around their axes of rotation.

The lips 8' form the lateral walls apt to define the sides 5 and 6 of the continuous layer 1.

The moulding means 14 in the more general aspects of the present invention are mainly constituted by a base surface 17 making part of an annular structure rotating continuously by means of rotating means, a driving rotating means 19 and a driven rotating means 20, respectively, and by substantially conical protuberances 21 projecting from the base surface 17 and having inner cavities open on the base surface itself.

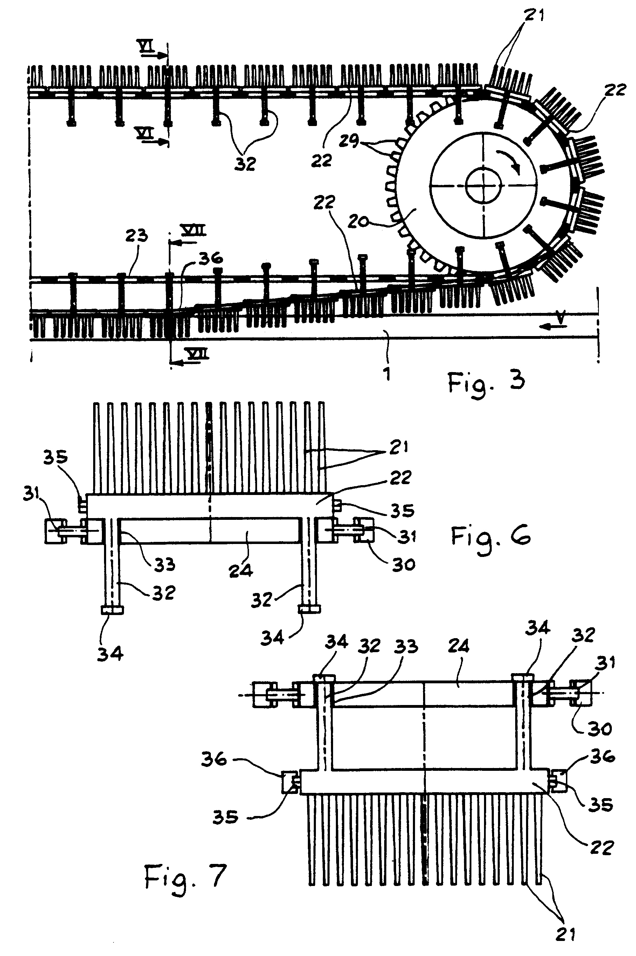

According to one embodiment, the moulding means 17 (figure 3) comprise a plurality of rigid plates 22, each one having projecting protuberances 21, a conveyer 23 comprised between two rotating means represented by toothed wheels, means for connecting the plates 22 to the conveyer 23, moving means of the conveyer for moving the plates 22 between a first and a second station, means for driving and guiding the plates to graduate the approaching and the separation of the protuberances 21 from the surface where the latex foam is laid.

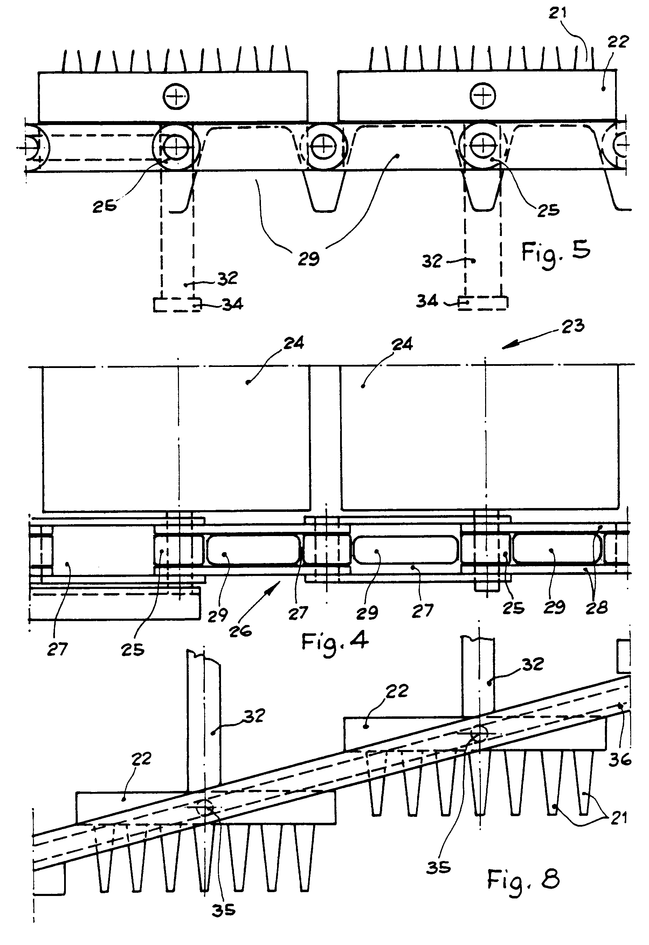

Preferably, the conveyer 23 is constituted by a plurality of slats 24 independent of one another and placed side by side; the slats are laterally connected to articulated joints 25 of two chains one of which is indicated with reference numeral 26 in Figure 4.

The lateral chains constitute the moving means of the conveyer 23 and each chain meshes with two toothed wheels, a driving toothed wheel and a driven toothed wheel, respectively.

Each chain 26 (figure 4) is formed by links 27 connected to one another through the articulated joints 25 and more detailed each link 27 is constituted by two straps 28 separated from each other by the articulated joints 25 to which they are hinged.

The links 27 form empty spaces at the inside of which the teeth 29 of each toothed wheel pass during the windings of the chains on the toothed wheels (figure 5).

Moreover the slats 24 of the conveyer 23 comprise at the appropriate sides prolongations 30 of the articulated joints 25 inserted in suitable guides 31 of the fixed structure (figures 6, 7).

The means for connecting the plates 22 to the conveyer 23 (figures 6, 7) comprise at least a pair of stems 32 projecting from the surface of each plate 22 opposite to that from which the protuberances 21 project and also corresponding holes 33 crossed by the cited stems, obtained on the slats 24 of the conveyer 23.

The free ends of the stems 32 are provided with stop parts 34 having an area greater than that of the hole 33 crossed by the stem.

Preferably, said stop parts can be formed by a threaded disc that may be screwed on the stem to vary, thanks to the ability of this latter to go down more or less, the depth of the cell 2 formed in the foam layer 1 (figure 1).

The driving means of the plated 22 comprise on their turn lateral pins 35 and grooved guides 36 for housing the pins 35.

The guide 36 are arranged, respectively, between the exit of the driven toothed wheel 20 and the surface for laying the foam constituted by the conveyor belt 8 and between the surface for laying the foam and the entrance of the driving toothed wheel.

Figure 8 shows one of the lateral guides of the means for setting in action the plates.

The guide is arranged between the driven toothed wheel 20 and the surface of the conveyor belt 8 and as shown by figure 8 the lateral pin 35 of each plate 22 is inserted in the corresponding groove of the guide 36 and travels along a gradual inclination portion between the toothed wheel 20 and the laying surface of the foam.

Now it is described the continuous manufacture of the cellular foam layer divisible into a plurality of pieces to form a plurality of cellular mattresses.

In the steps preliminary to the manufacture of the foam layer, both the conveyor belt forming the laying surface and the annular structure to which the means for moulding the cells in the layer are placed under rotation.

The annular structure is set in action at the same surface speed as the conveyor belt and is made in such a way as to be tangent to the belt in the portion comprises between the stations 9 and 10 (figure 1).

The foam layer is then laid in proximity of the station 9 by means of the device 12 provided in a known way with a foam injector arranged transversely of the advancing direction of the rubber conveyor belt 8 now in one sense, now in opposite sense.

The height of the layer is regulated by a levelling element, known as blade 12', arranged immediately down line of the device 12.

The foam layer already levelled on the conveyor belt 8 is directed towards the station 10 being subject before entering in the vulcanizer 13 to the penetration of the protuberances apt to the moulding of the cells 2.

The advancing of the layer and the gradual penetration of the protuberances into the foam layer is represented in the example of figure 3.

As shown in figures 3 the various plates 22 provided with the protuberances 21, are always integral with the conveyor 23 both in the upper branch and in the lower branch thanks to the presence of the stems 32 passing through the holes of the conveyor 23.

In the portion between the exit of the driven toothed wheel 20 and the entry into the vulcanizer 13 the various plates 22 slide by means of the stems 32 in the holes 33 of the slats 24 passing in practice from the configuration of figure 6 assumed originally in the upper branch of the conveyer 23 to the configuration of figure 7.

The approaching of the protuberances 21 to the continuous layer 1 is graduated with a law imposed by the inclination of the guides 36 with respect to the conveyor belt 8.

In fact, as shown in figure 8 the lateral pins 35 of the plates 22 are engaged to slide in the appropriate grooves of the guides 36 associated to the fixed frame of the plant.

Moreover the stems 32 slide perpendicularly to the slats 24 of the conveyer 23 whose lower branch is stretched between the two toothed wheels 19 and 20 and is directed parallely to the conveyor belt 8 at the same speed.

Moreover in the diametral plane of the toothed wheel 20 directed perpendicularly to the layer moving forward on the conveyor belt, the distance between the outer surface of the plate 22 and the outermost face of the foam layer 1 in movement is greater than the height of the protuberances 21 on the plate 22 and anyhow in any solution is at least equal to the height of the protuberances.

This condition avoids that the various protuberances arranged on one plate up line of the cited diametral plane interfere with the foam layer when the axis of the protuberances is still oblique instead of perpendicular with respect to the faces of the layer.

The cited characteristics guarantee the gradual and complete penetration of the protuberances 21 always in the direction perpendicular to the faces of the layer itself.

Therefore the moulding of the cells in the foam layer in continuous movement is carried out advantageously with a perfect geometry of the cells.

Immediately after the moulding step, the layer already provided with cells passes little by little through the tunnel vulcanizer 13 receiving the heat necessary to the cross-linking of the foam mass by means of the steam under pressure.

In a further step, the various protuberances 21 penetrated in the foam mass, gradually move away from the layer always in direction perpendicular to the surfaces of the conveyor belt 8.

The mechanism by which the protuberances are moved away, not shown for sake of simplicity, is the same as that of figure 3, with the difference that the lateral pins 35 of the various plates 22 are now advanced along guides 36 directed by the conveyor belt 8 towards the entrance of the driving toothed wheel.

The continuous layer is then removed gradually passing through a pair of rollers set in action with a surface speed equal to the approach speed of the belt.

By way of example, figure 2 shows two drawing rollers 37 of the layer 1.

Downstream of the cited rollers, the layers is cut according to successive transversal lines of which two adjacent are at a distance from each other corresponding to the width of the single mattress.

In the end each length is subject to the usual drying step.

In alternative to what now described, the plant could comprise a different system for driving and guiding the plates 22 in order to obtain the gradual penetration of the protuberances 21 perpendicularly to the layer 1.

For instance the various plates 22 through appropriate vertical rods (not shown) could be soldered to the lateral chains.

Moreover, the same plates could be provided with lateral rollers inserted in corresponding grooves of the fixed frame.

In this solution the chains, owing to their flexibility, should follow the movements of the plates.

Moreover the surface for laying the foam could be constituted instead of rubber belts by belts of flexible polymeric material or different materials on condition that they are suitable for bearing the foam layer between the two stations 9 and 10 (figure 1).

For instance the conveyor belt 8 could be made of metallic material to favour the transmission of heat during vulcanization.

According to one embodiment, a belt provided with a flat laying surface could be associated to two lateral walls extending in the portion comprised between the two stations 9 and 10.

In the stated solution the two lateral walls should be at a distance from each other equal to the length desired for the single mattress and very advantageously one of the walls could be moved with respect to the other in case it is wished to vary the length of the single mattress.

Moreover the means for moulding the cells could assume realizations and shapes different from those described, disposing always in any solution groups of plates or successive strips provided with relative protuberances and associating said strips to a conveyor track or like element.

In these solutions it is possible to arrange groups of successive strips defined by a determined first pitch and further groups of successive strips having a distance from one another different from the first pitch in order to vary the geometry of the cells during the moulding step and to obtain then mattresses that differ from one another for the number of the cells.

Moreover both the plates 22 and the protuberances 21 could be made up of different materials, as for example metallic materials, preferably of aluminium for a good transmission of heat to the mass of foam during the vulcanization.

In addition to what said, the surface of the conveyor belt could be provided with ribs or like elements arranged with particular geometry in order to determine on the foam layer in contact with the belt a pre-determined imprinting apt to appear on the outer face of the final product.

The present invention achieves all the aimed purposes.

In fact the vulcanization of the continuous layer is carried out by supplying heat by means of a heating fluid either all around the layer or inside the cells as the layer.

In particular, in the plant the heat passes inside the cells thanks to the presence of protuberances 21 open at the base, for instance at the plate 22 to which they are connected.

Consequently, during the passage of the foam layer through the tunnel 13, the steam under pressure spreads capillarily in the whole mass surrounding the protuberances 21 through the cavities delimited by the walls of the protuberances themselves.

Since the cells are diffused in a uniform manner in the whole mass of foam, the vulcanization is uniform for the whole layer. Therefore no zone is localized inside the foam wherein the cross-linking is less than that of other zones with a consequent lower resistance of said zone in the finished product.

Moreover the characteristics of the present invention permit to avoid the formation of a final product with not desired imprintings on the outer face.

This result is obtained since the surface of the layer apt to constitute the outer face of the final product is always protected before the vulcanization, remaining in contact with the laying surface of the latex foam from the beginning of the laying up to the vulcanization.

Therefore, also admitting for instance that the steam coming out of the tunnel, transforms into condensate, possible drops of condensate falling downwards could not deform with printings and the like the surface of the layer apt to constitute the outer face of the final product, but said drops will fall only to the face where there are the cells, i.e. the inner face to which a minor aesthetic aspect is required.

Further the manufacture of the layer according to the invention permits to obtain products different from one another for dimensional variations without making recourse to substantial variations in the process and plant.

For example according to the characteristics of the invention it is possible to obtain cellular mattresses of height different from one another, all with the same capacity load.

In fact it is possible, wishing to obtain mattresses higher than those of a preceeding processing cycle, to increase the lowering degree of the moulding means, in particular the lowering of the plates 22 with respect to the slats 24 (figures 6, 7). The cited result could be reached by utilizing on the stem 32 an end part 34 constituted by a screw nut.

In this solution the screw nut is moved toward the free end (as in figure 7) so that the protuberances 21 penetrate into the foam to a depth greater than that of the mattresses of the preceeding processing cycle and the upper continuous thickness in the two mattresses of different height is equal, the whole in order to maintain more or less the same capacity load.

Then, if it is desired to obtain mattresses with equal height, but with different capacity load, it is understandable how it is still possible to vary the sinking of the protuberances 21 so as to vary with the upper thickness of the layer the whole protuberance of the mattress.

The cited result gives the advantage of regulating geometrically the capacity load of the mattress without making recourse to physical variations of the compound, for instance as it could be made with variations of the density of the foam obtainable only with complicated and long preparation and measuring steps of the compound.

Although some embodiments of the present invention have been illustrated and described, it is understood that the invention includes in its scope any other alternative embodiment accessible to a technician of the field; for example, the method and plant of the invention can be utilized for manufacturing cellular layers of latex foam either of natural or synthetic rubber, or continuous cellular layers of materials corresponding to those cited and divisible then into single products as mattresses, cushions or other cellular products for home, sanitary, civil and military use.

## Claims

1. Process for manufacturing cellular products of latex foam or the like, in the form of a continuous layer (1) to be divided into single pieces, said process comprising the following steps:
- to advance a laying surface (8) between two stations, a first and a second station, respectively;
- to place, in proximity of the first station, on the laying surface, the latex foam for a predetermined height and to form a continuous layer delimited by a first face in contact with said laying surface, by a second face opposite to the first one and by two sides;
- to form a plurality of cells (2) open on one face of the continuous layer;
- to vulcanize the latex foam between two stations by supplying heat around the layer,
said process being characterized by the fact that the step of foaming said cells is got by:
- inserting, before the vulcanization, according to a direction normal to the laying surface, a plurality of projections (21) through the second face of the foam layer already formed; and
- extracting, after the vulcanization and according to a direction normal to the laying surface, the plurality of projections from the second face of the foam layer.

2. Process as in claim 1, characterized by the fact the vulcanizing heat is obtained by supplying steam around the continuous layer and within the projections forming the cells.

3. Process as in claim 1, characterized by the fact of advancing in a continuous manner the said laying surface and of moulding said plurality of cells in direction perpendicular to the faces of the layer.

4. Process as in claim 1, characterized by the fact of advancing the laying surface with an intermittent motion and of moulding a plurality of cells perpendicularly to said faces of the layer when said surface is still.

5. Process as in claim 1, characterized by the fact of vulcanizing said layer by supplying heat by means of steam under pressure.

6. Plant (7) for manufacturing cellular products, of latex foam or the like, in the form of a continuous layer (1) to be divided into single pieces, said plant comprising:
- a laying surface (8) moving forward between a first (9) and a second station;
- motive means (11, 11') for advancing said laying surface;
- a device (12) for placing and forming a layer of foam in proximity of the first station, said layer being delimited by a first face in contact with the laying surface, by a second face opposite to the first one and by two sides;
- moulding means (14) to form a plurality of cells open on one of said faces and driving means thereof;
- a vulcanized (13) positioned between the two stations;
said plant being characterized in that, said moulding means is constituted by a base surface (17) provided with a plurality of projecting protuberances (21) having the same shape as the cells to be moulded, said protuberances at least in a space comprised between the said two stations being oriented in direction perpendicular to the face of said layer, and in that said driving means moves said base surface from a rest position wherein the protuberances are above the layer to a working position wherein the protuberances penetrate perpendicularly to the faces of said layer up to a depth pre-determined for moulding the cells, and moves the protuberances perpendicularly to the layer away from the position of maximum penetration in the layer up to said rest position.

7. Plant as in claim 6 characterized by the fact that said moulding means (14) are active between the station (9) of injection of the foam and a vulcanization tunnel (13) in which the vulcanization heat is supplied by steam under pressure.

8. Plant as in claim 6, characterized by the fact of comprising moulding means (14) in combination with a laying surface (8) provided with two walls for a lateral delimitation of the foam layer, one of the walls being movable in direction transversal to the maximum extension of the laying surface.

9. Plant as in claim 7 or 8, characterized by the fact that said base (17) and laying surfaces (8) are moved parallely at the same speed between the two stations.

10. Plant as in claim 7 or 8, characterized by the fact that the laying surface moves forward with an intermittent motion and said driving means approach and separate said moulding means when the laying surface is still.

11. Plant as in any claim from 7 to 10, characterized by the fact of comprising moulding and driving means in combination with a laying surface (8) constituted by a closed ring conveyor belt between at least two rotating means (11, 11').

12. Plant as in claim 11, characterized by the fact that said conveyor belt is of flexible polymeric material.

13. Plant as in claim 11, characterized by the fact that said conveyor belt is of deformable material, at least one of the lips (8') of said belt (8) being turned upwards to form a wall for a lateral delimitation of said layer.

14. Plant as in claim 6, characterized by the fact that said base surface makes part of a closed annular structure.

15. Plant as in claim 6, characterized by the fact that said base surface (17) is formed by a plurality of contiguous strips (22) associated to a track (23) set in action by rollers.

16. Plant as in claim 15, characterized by the fact that said track comprises groups of successive strips defined by a pre-determined pitch, further successive groups of strips having a distance from one another different from said pre-determined pitch.

17. Plant as in claim 6, characterized by the fact that said moulding means (17) comprise a plurality of rigid plates (22) provided with a plurality of projecting protuberances (21), an element (23) for conveying the plates closed as a ring and placed between two rolling means, means (32) for connecting the plates to said conveyer, motion means of the conveyer for moving said plates between the first and second station, means for setting in action the plates to graduate the approach and separation of the protuberances form the surface for laying the foam.

18. Plant as in claim 17, characterized by the fact that said element for conveying the plates is formed by a plurality of independent slats (24) placed side by side, said slats being connected laterally to the articulated joints (25) of two chains (26).

19. Plant as in claim 17, characterized by the fact that said means for moving the conveyer comprise two lateral chains (26) and for each chain at least two toothed wheels, a driving toothed wheel (19) and a driven toothed wheel (20), respectively.

20. Plant as in claim 19, characterized by the fact that each chain (26) is formed by links (27) connected to one another through articulated joints (25), each link comprising two straps (28) spaced from each other by the end articulated joints (25) to which they are hinged, the teeth (29) of each toothed wheel passing in the space between the straps of each link to mesh with the articulated joints, said chains being stretched in the lower branch between the two toothed wheels.

21. Plant as in claim 17, characterized by the fact that said means for connecting the plates to said conveyer comprise at least a pair of stems (32) protruding from the surface of each plate (22) opposite to that from which the protuberances (21) project, said stems being assembled in a sliding manner through appropriate holes (33) of said conveyer and being provided at the free end with stop transversal parts (34) having an area greater than that of the relative passage hole (33).

22. Plant as in claim 21, characterized by the fact that said stop parts are formed by a threaded disc that can be screwed on the stem to vary with the penetration degree of the stem the depth of the cell in the foam layer.

23. Plant as in claim 17, characterized by the fact that said means for setting in action the plates (22) comprise lateral pins (35) in the plates and guides (36) at the sides of the plates, each guide being provided with a groove corresponding to the maximum dimension of the pins, said guides (36) being arranged, respectively, between the exit of the driven rotating means (20) and the surface (8) for laying the foam and between this latter and the entrance of the driving rotating means, the lateral pins (35) of each plate (22) being inserted in the corresponding groove of the guides (36) in the gradual inclination passage portion between each rotating means and the surface for laying the foam.

24. Plant as in claim 17, characterized by the fact that said plates (22) are rigidly connected to a flexible conveyer and said means for setting in action the plates comprise pins (35) in lateral position to the plates assembled in sliding manner in appropriate grooves having an inclined path, said grooves being comprised between the rotating means and the surface for laying the foam.

25. Plant as in claim 17, characterized by the fact that in the diametral plane of the rotating means (20) perpendicular to the laying surface of the conveyor belt the distance between the plate (22) at said diametral plane and the outermost face of the advancing foam layer (1) is at least equal to the height of the protuberances (21).

26. Plant as in claim 17, characterized by the fact that the plates and the protuberances are of metallic material.

27. Plant as in claim 6, characterized by the fact that the laying surface of the layer comprises imprinting means.

## Patentansprüche

1. Verfahren zur Herstellung von Zellenprodukten aus Latexschaum oder dergleichen in der Form einer kontinuierlichen, in einzelne Stücke zu zerteilenden Schicht (1), wobei das Verfahren die folgenden Schritte aufweist,
- eine Ablegefläche (8) zwischen zwei Stationen, nämlich einer ersten und einer zweiten Station, vorwärtszubewegen,
- in der Nähe der ersten Station auf der Ablegefläche den Latexschaum über eine vorher festgelegte Höhe aufzubringen und eine kontinuierliche Schicht auszubilden, die von einer ersten Fläche in Kontakt mit der Ablegefläche, von einer der ersten Fläche gegenüberliegenden zweiten Fläche und von zwei Seiten begrenzt wird,
- eine Vielzahl von Zellen (2) auszubilden, die auf einer Fläche der kontinuierlichen Schicht offen sind,
- den Latexschaum zwischen den beiden Stationen durch Zuführen von Wärme um die Schicht herum zu vulkanisieren,
dadurch gekennzeichnet, daß der Schritt des Schäumens der Zellen erhalten wird durch
- Einführen einer Vielzahl von Vorsprüngen (21) durch die zweite Fläche der bereits gebildeten Schaumschicht vor dem Vulkanisieren in eine Richtung senkrecht zu der Ablegegefläche und
- Herausziehen der Vielzahl von Vorsprüngen aus der zweiten Fläche der Schaumschicht nach dem Vulkanisieren und in eine Richtung senkrecht zur Ablegefläche.

2. Verfahren nach Anspruch 1, dadurch gekennzeichnet, daß die Vulkanisierungswärme dadurch erhalten wird, daß Dampf um die kontinuierliche Schicht herum und in den die Zellen bildenden Vorsprüngen zugeführt wird.

3. Verfahren nach Anspruch 1, dadurch gekennzeichnet, daß die Ablegefläche kontinuierlich vorwärtsbewegt wird und daß die Vielzahl von Zellen in einer Richtung senkrecht zu den Flächen der Schicht ausgeformt werden.

4. Verfahren nach Anspruch 1, dadurch gekennzeichnet, daß die Ablegefläche mit einer intermittierenden Bewegung vorwärtsbewegt wird und daß die Vielzahl von Zellen senkrecht zu den Flächen der Schicht ausgeformt werden, wenn die Fläche stillsteht.

5. Verfahren nach Anspruch 1, dadurch gekennzeichnet, daß die Schicht durch Zuführen von Wärme mittels Dampf unter Druck vulkanisiert wird.

6. Anlage (7) zum Herstellen von Zellenprodukten aus Latexschaum oder dergleichen in Form einer kontinuierlichen, in einzelne Stücke zu zerteilenden Schicht (1)
- mit einer Ablegefläche (8), die sich zwischen einer ersten (9) und einer zweiten Station vorwärtsbewegt
- mit einer Antriebseinrichtung (11,11') zum Vorwärtsbewegen der Ablegefläche,
- mit einer Vorrichtung (12) zum Anordnen und Ausbilden einer Schaumschicht in der Nähe der ersten Station, wobei die Schicht von einer ersten Fläche in Kontakt mit der Ablegefläche, von einer der ersten Fläche gegenüberliegenden zweiten Fläche und von zwei Seiten begrenzt wird,
- mit einer Formeinrichtung (14) zum Ausbilden einer Vielzahl von Zellen, die auf einer der Flächen offen sind, und mit einer Antriebseinrichtung dafür und
- mit einem Vulkanisator (13), der zwischen den beiden Stationen angeordnet ist,
dadurch gekennzeichnet,
- daß die Formeinrichtung von einer Basisfläche (17) gebildet wird, die mit einer Vielzahl von abstehenden Vorsprüngen (21) versehen ist, welche die gleiche Form wie die auszuformenden Zellen haben,
- daß die Vorsprünge wenigstens in einem Raum zwischen den beiden Stationen in eine Richtung senkrecht zu den Flächen der Schicht ausgerichtet sind und
- daß die Antriebseinrichtung die Basisfläche aus einer Ruhestellung, in der sich die Vorsprünge über der Schicht befinden, in eine Arbeitsstellung bewegt, in welcher die Vorsprünge senkrecht zu den Flächen der Schicht bis zu einer für das Ausformen der Zellen vorgegebenen Tiefe eindringen, und die Vorsprünge senkrecht zu der Schicht weg aus der Position des maximalen Eindringens in die Schicht bis in die Ruhestellung bewegt.

7. Anlage nach Anspruch 6, dadurch gekennzeichnet, daß die Formeinrichtung (14) zwischen der Station (9) zum Injizieren des Schaums und einem Vulkanisatortunnel (13) aktiv ist, in dem die Vulkanisierungswärme durch Dampf unter Druck zugeführt wird.

8. Anlage nach Anspruch 6, gekennzeichnet durch eine Formeinrichtung (14) in Kombination mit einer Ablegefläche (8), die mit zwei Wänden für eine seitliche Begrenzung der Schaumschicht versehen ist, wobei eine der Wände in Querrichtung zur maximalen Längserstreckung der Ablegefläche beweglich ist.

9. Anlage nach Anspruch 7 oder 8, dadurch gekennzeichnet, daß die Basis (17) und die Ablegefläche (8) parallel mit der gleichen Geschwindigkeit zwischen den beiden Stationen bewegt werden.

10. Anlage nach Anspruch 7 oder 8, dadurch gekennzeichnet, daß die Ablegefläche sich intermittierend vorwärtsbewegt und daß die Antriebseinrichtung die Formeinrichtung annähert und trennt, wenn die Ablegefläche stillsteht.

11. Anlage nach einem der Ansprüche 7 bis 10, gekennzeichnet durch eine Form- und Antriebseinrichtung in Kombination mit einer Ablegefläche (8), die von einem geschlossenen Ringförderband zwischen wenigstens zwei rotierenden Einrichtungen (11, 11') gebildet wird.

12. Anlage nach Anspruch 11, dadurch gekennzeichnet, daß das Förderband aus flexiblem Polymermaterial besteht.

13. Anlage nach Anspruch 11, dadurch gekennzeichnet, daß das Förderband ein verformbares Material ist, wobei wenigstens einer der Ränder (8') des Bandes (8) nach oben zur Bildung einer Wand für eine seitliche Begrenzung der Schicht abgewinkelt ist.

14. Anlage nach Anspruch 6, dadurch gekennzeichnet, daß die Basisfläche einen Teil eines geschlossenen Ringaufbaus bildet.

15. Anlage nach Anspruch 6, dadurch gekennzeichnet, daß die Basisfläche (17) von einer Vielzahl aneinanderliegender Bänder (22) gebildet wird, denen eine Führung (23) zugeordnet ist, die durch Rollen in Aktion versetzt wird.

16. Anlage nach Anspruch 15, dadurch gekennzeichnet, daß die Führung Gruppen von aufeinanderfolgenden Bändern aufweist, die durch eine vorher festgelegte Teilung definiert sind, wobei weitere aufeinanderfolgende Gruppen von Bändern einen Abstand voneinander haben, der zu der vorher festgelegten Teilung unterschiedlich ist.

17. Anlage nach Anspruch 6, dadurch gekennzeichnet, daß die Formeinrichtung (17) eine Vielzahl von starren Platten (22), die mit einer Vielzahl von abstehenden Vorsprüngen (21) versehen sind, ein Element (23) zum Fördern der Platten geschlossen als ein Ring und zwischen zwei Rolleneinrichtungen angeordnet, eine Einrichtung (32) zum Verbinden der Platten mit dem Förderer, eine Treibeinrichtung des Förderers zum Bewegen der Platten zwischen der ersten und der zweiten Station und eine Einrichtung aufweist, um die Platten in Aktion zu setzen, damit das Annähern und das Trennen der Vorsprünge bezüglich der Fläche zum Ablegen des Schaums abgestuft wird.

18. Anlage nach Anspruch 17, dadurch gekennzeichnet, daß das Element zum Fördern der Platten von einer Vielzahl von unabhängigen, nebeneinander angeordneten Leisten (24) gebildet wird, die seitlich mit den Gelenkstössen (25) von zwei Ketten (26) verbunden sind.

19. Anlage nach Anspruch 17, dadurch gekennzeichnet, daß die Einrichtung zum Bewegen des Förderbandes zwei seitliche Ketten (26) und für jede Kette wenigstens zwei Zahnräder aufweist, nämlich ein treibendes Zahnrad (19) und ein getriebenes Zahnrad (20).

20. Anlage nach Anspruch 19, dadurch gekennzeichnet, daß jede Kette (26) von Gliedern (27) gebildet wird, die miteinander durch Gelenkstösse (25) verbunden sind, wobei jedes Glied zwei Bügel (28) aufweist, die im Abstand voneinander durch die Endgelenkstösse (25) angeordnet sind, an denen sie angelenkt sind, die Zähne (29) jedes Zahnrades in den Raum zwischen den Bügeln eines jeden Gliedes ragen, um mit den Gelenkstössen zu kämmen, und die Ketten in dem unteren Trum zwischen den beiden Zahnrädern gestreckt werden.

21. Anlage nach Anspruch 17, dadurch gekennzeichnet, daß die Einrichtung zum Verbinden der Platten mit dem Förderer wenigstens ein Paar von Schäften (32) aufweist, die von der Fläche jeder Platte (22), die der gegenüberliegt, von der die Vorsprünge (21) abstehen, vorstehen, und die gleitend verschiebbar durch geeigete Löcher (33) des Förderers montiert und an ihrem freien Ende mit Anschlagquerteilen (34) versehen sind, die eine Fläche haben, die größer ist als die der damit in Beziehung stehenden Durchgangslöcher (33).

22. Anlage nach Anspruch 21, dadurch gekennzeichnet, daß die Anschlagteile von einer Gewindescheibe gebildet werden, die auf den Schaft geschraubt werden kann, um mit dem Eindringgrad des Schaftes die Tiefe der Zelle in der Schaumschicht zu variieren.

23. Anlage nach Anspruch 17, dadurch gekennzeichnet, daß die Einrichtung zum In-Aktion-Setzen der Platten (22) seitliche Stifte (35) in den Platten und Führungen (36) an den Seiten der Platten aufweist, wobei jede Führung mit einer Nut versehen ist, die der Maximalabmessung der Stifte entspricht, die Führungen (36) jeweils zwischen dem Austritt der getriebenen Dreheinrichtung (20) und der Fläche (8) zum Ablegen des Schaums und zwischen dieser letzteren und dem Eintritt der treibenden Dreheinrichtung angeordnet sind, und die seitliche Stiften (35) jeder Platte (22) in die entsprechende Nut der Führungen (36) in dem Kanalabschnitt mit abgestufter Neigung zwischen jeder Dreheinrichtung und der Fläche zum Ablegen des Schaums eingeführt sind.

24. Anlage nach Anspruch 17, dadurch gekennzeichnet, daß die Platten (22) starr mit einem flexiblen Förderer verbunden sind und daß die Einrichtungen zum In-Aktion-Setzen Plattenstifte (35) in einer seitlichen Position zu den Platten aufweisen, die gleitend verschiebbar in geeigneten Nuten angeordnet sind, die eine geneigte Bahn haben, wobei die Nuten zwischen den Dreheinrichtungen und der Fläche zum Ablegen des Schaums angeordnet sind.

25. Anlage nach Anspruch 17, dadurch gekennzeichnet, daß in der Diametralebene der Dreheinrichtung (20) senkrecht zur Ablegefläche des Förderbandes der Abstand zwischen der Platte (22) an der Diametralebene und der äußersten Fläche der sich vorwärts bewegenden Schaumschicht (1) wenigstens gleich der Höhe der Vorsprünge (21) ist.

26. Anlage nach Anspruch 17, dadurch gekennzeichnet, daß die Platten und die Vorsprünge aus einem metallischen Material bestehen.

27. Anlage nach Anspruch 6, dadurch gekennzeichnet, daß die Ablegefläche der Schicht eine Bedruckungseinrichtung aufweist.

## Revendications

1. Procédé pour fabriquer les produits cellulaires en mousse de latex ou analogues, sous la forme d'une couche continue (1) devant être subdivisée en morceaux individuels, ledit procédé comprend les étapes suivantes :
- faire avancer une surface de support (8) entre deux postes, à savoir un premier poste et un second poste;
- placer à proximité du premier poste, sur la surface de support, la mousse de latex sur une hauteur prédéterminée et former une couche continue délimitée par une première face en contact avec ladite couche de support, par une seconde face située à l'opposé de la première face et par deux côtés;
- former une pluralité de cellules (2) s'ouvrant en direction d'une face de la couche continue;
- vulcaniser la mousse de latex entre deux postes au moyen de l'application de chaleur autour de la couche, ledit traitement étant caractérisé en ce que l'étape de mise sous forme de mousse desdites cellules est obtenue par
- insertion, avant la vulcanisation, conformément à une direction perpendicululaire à la surface de support, d'une pluralité d'appendices saillants (21) à travers la seconde face de la couche de mousse déjà formée; et
- extraction, après la vulcanisation et conformément à une direction perpendiculaire à la surface de support, de la pluralité des appendices saillants à partir de la seconde face de la couche de mousse.

2. Procédé selon la revendication 1, caractérisé en ce que la charge de vulcanisation est obtenue par envoi d'une vapeur autour de la couche continue et dans les appendices saillants de formation des cellules.

3. Procédé selon la revendication 1, caractérisé en ce qu'on fait avancer d'une manière continue ladite surface de support et qu'on moule ladite pluralité de cellules dans une direction perpendiculaire aux faces de la couche.

4. Procédé selon la revendication 1, caractérisé en ce qu'on fait avancer la couche de support au moyen d'un déplacement intermittent et qu'on moule une pluralité de cellules perpendiculairement auxdites faces de la couche lorsque ladite surface est à l'arrêt.

5. Procédé selon la revendication 1, caractérisé en ce qu'on vulcanise ladite couche en envoyant de la chaleur au moyen de vapeur sous pression.

6. Installation (7) pour fabriquer les produits cellulaires, en mousse de latex ou analogue, sous la forme d'une couche continue (1) devant être subdivisée en morceaux individuels, ladite installation comprenant :
- une surface de support (8) avançant entre un premier poste (9) et un second poste;
- des moyens d'entraînement (11, 11') pour faire avancer ladite surface de support;
- un dispositif (12) pour mettre en place et former une couche de mousse à proximité du premier poste, ladite couche étant délimitée par une première face en contact avec la surface de support, par une seconde face située à l'opposé de la première face et par deux côtés;
- des moyens de moulage (14) pour former une pluralité de cellules s'ouvrant vers l'une desdites faces, et des moyens d'entraînement de ces moyens de moulage;
- un dispositif de vulcanisation (13) disposé entre les deux postes;
ladite installation étant caractérisée en ce que lesdits moyens de moulage sont constitués par une surface de base (17) pourvue d'une pluralité d'appendices saillants (21) possédant la même forme que les cellules devant être moulées, lesdits appendices saillants situés au moins dans un espace compris entre lesdits deux postes étant orientés dans une direction perpendiculaire aux faces de ladite couche, et en ce que lesdits moyens d'entraînement déplacent ladite surface de base depuis une position de repos, dans laquelle les appendices saillants sont situés au-dessous de la couche, jusqu'à une position de travail, dans laquelle les appendices saillants pénètrent perpendiculairement dans les faces de ladite couche, jusqu'à une profondeur prédéterminée pour le moulage des cellules, et déplacent les appendices saillants perpendiculairement à la couche, à partir de la position de pénétration maximale dans la couche jusquà ladite position de repos.

7. Installation selon la revendication 6, caractérisée en ce que lesdits moyens de moulage (14) agissent entre le poste (9) d'injection de la mousse et un tunnel de vulcanisation (13), dans lequel la charge de vulcanisation est appliquée au moyen d'une vapeur sous pression.

8. Installation selon la revendication 6, caractérisée en ce qu'il comporte des moyens de moulage (14) en combinaison avec une surface de support (8) comportant deux parois pour une délimitation latérale de la couche de mousse, l'une des parois étant déplaçable dans une direction transversale par rapport à la direction d'étendue maximale de la surface de support.

9. Installation selon la revendication 7 ou 8, caractérisée en ce que ladite surface de base (17) et ladite surface de support (8) sont déplacées parallèlement et à la même vitesse entre les deux postes.

10. Installation selon la revendication 7 ou 8, caractérisée en ce que la surface de support avance selon un déplacement intermittent, et lesdits moyens d'entraînement se rapprochent et s'écartent desdits moyens de moulage lorsque la surface de support est à l'arrêt.

11. Installation selon l'une quelconque des revendications 7 à 10, caractérisée en ce qu'il comprend des moyens de moulage et d'entraînement en combinaison avec une surface de support (8) constituée par une bande convoyeuse en anneau fermé, située entre au moins deux moyens d'entraînement en rotation (11, 11').

12. Installation selon la revendication 11, caractérisée en ce que ladite bande convoyeuse est réalisée en un matériau polymérique flexible.

13. Installation selon la revendication 11, caractérisée en ce que ladite bande convoyeuse est réalisée en un matériau déformable, au moins l'un des rebords (8') de ladite bande (8) étant dirigé vers le haut de manière à former une paroi pour réaliser une délimitation latérale de ladite couche.

14. Installation selon la revendication 6, caractérisée en ce que ladite surface de base fait partie d'une structure annulaire fermée.

15. Installation selon la revendication 6, caractérisée par le fait que ladite surface de base (17) est formée par une pluralité de barres contiguës (22) associées à une courroie (23) mise en action par des rouleaux.

16. Installation selon la revendication 15, caractérisée en ce que ladite courroie comporte des groupes de barres successives disposées selon un pas prédéterminé, d'autres groupes successifs de barres étant séparés par une distance réciproque différente dudit pas prédéterminé.

17. Installation selon la revendication 6, caractérisée en ce que lesdits moyens de moulage (17) comprennent une pluralité de plaques rigides (22) pourvues d'une pluralité d'appendices saillants (21), un élément (23) pour convoyer les plaques, fermé sous la forme d'un anneau et disposé entre deux moyens de roulement, des moyens (32) pour raccorder les plaques audit convoyeur, des moyens d'entraînement du convoyeur pour entraîner lesdites plaques entre les premier et second postes, des moyens pour mettre en action les plaques afin d'obtenir une gradation de l'approche et de la séparation des appendices saillants à partir de la surface de dépôt de la mousse.

18. Installation selon la revendication 17, caractérisée en ce que ledit élément servant à convoyeur les plaques est formé par une pluralité de lattes indépendantes (24) disposées côte-à-côte, lesdites lattes étant raccordées latéralement aux joints articulés (25) de deux chaînes (26).

19. Installation selon la revendication 17, caractérisée en ce que lesdits moyens servant à déplacer le convoyeur comprennent deux chaînes latérales (26) et, pour chaque chaîne, au moins deux roues dentées, respectivement une roue dentée motrice (19) et une roue dentée entraînée (20).

20. Installation selon la revendication 19, caractérisée en ce que chaque chaîne (26) est formée de maillons (27) raccordés entre eux par des joints articulés (25), chaque maillon comprenant deux barreaux (28) espacés l'un de l'autre par les joints articulés d'extrémité (25), auxquels ils sont articulés, les dents (29) de chaque roue dentée passant dans l'espace situé entre les barreaux de chaque maillon pour engrener avec les joints articulés, lesdites chaînes étant tendues dans le brin inférieur situé entre les deux roues dentées.

21. Installation selon la revendication 17, caractérisée en ce que lesdits moyens de raccordement des plaques audit convoyeur comprennent au moins un couple de tiges (32), qui font saillie à partir de la surface de chaque plaque (22), à l'opposé de la surface d'où font saillie les appendices saillants (21), lesdites tiges étant assemblées d'une manière glissante dans des trous appropriés (33) dudit convoyeur et comportant, à leur extrémité libre, des éléments transversaux d'arrêt (34) possédant une surface supérieure à celle du trou de passage relatif (33).

22. Installation selon la revendication 21, caractérisée en ce que lesdits éléments d'arrêt sont formés par un disque taraudé, que l'on peut visser sur la tige de manière à modifier, au moyen du degré de pénétration de la tige, la profondeur de la cellule dans la couche de mousse.

23. Installation selon la revendication 17, caractérisée en ce que lesdits moyens pour mettre en action les plaques (22) comprennent des tétons latéraux (35) ménagés dans les plaques et des guides (36) situés sur les côtés des plaques, chaque guide étant pourvu d'une rainure qui correspond à la taille maximale des tétons, lesdits guides (36) étant disposés respectivement entre la sortie des moyens rotatifs d'entraînement (20) et la surface (8) servant à supporter la mousse et entre cette dernière et l'entrée des moyens rotatifs d'entraînement, les tétons latéraux (35) de chaque plaque (22) étant insérés dans la rainure correspondante des guides (36) dans la partie formant passage à inclinaison graduelle entre chacun des moyens rotatifs et la surface servant à supporter la mousse.

24. Installation selon la revendication 17, caractérisée en ce que lesdites plaques (22) sont raccordées rigidement à un convoyeur flexible, et lesdits moyens pour mettre en action les plaques comprennent les tétons (35) situés dans une position latérale par rapport aux plaques assemblées, selon un mode de glissement dans des rainures appropriées comportant un trajet incliné, lesdites rainures étant formées entre les moyens rotatifs et la surface de support de la mousse.

25. Installation selon la revendication 17, caractérisée en ce que dans le plan diamétral des moyens rotatifs (20) et perpendiculairement à la surface de support de la bande convoyeuse, la distance entre la plaque (22) dans ledit plan diamétral et la face la plus extérieure de la couche de mousse (1) qui avance est au moins égale à la hauteur des appendices saillants (21).

26. Installation selon la revendication 17, caractérisée en ce que les plaques et les appendices saillants sont réalisés en un matériau métallique.

27. Installation selon la revendication 6, caractérisée en ce que la surface de support de la couche comprend des moyens d'impression.
